# EUROPEAN PATENT SPECIFICATION

(11) **EP 4 344 524 B1**
(45) Date of publication and mention of the grant of the patent: **04.03.2026**
(21) Application number: 23199574.7
(22) Date of filing: 26.09.2023
(51) Int. Cl.: A01D 34/416, A01D 34/78, A01D 34/90

(54) **GARDEN TOOL**
GARTENWERKZEUG
OUTIL DE JARDINAGE

(30) Priority: 30.09.2022 CN 202222600380 U
(43) Date of publication of application: 03.04.2024
(73) Proprietor: Greenworks (Jiangsu) Co., Ltd., Changzhou, Jiangsu 213023 (CN)
(72) Inventor: WANG, Chaoyi, Jiangsu, 213023 (CN)
(74) Representative: Bergenstråhle & Partners AB

(56) References cited:
- EP-A1- 3 014 975
- EP-A1- 3 025 572
- CN-B- 113 305 788
- CN-U- 212 794 851
- CN-U- 214 430 197
- CN-U- 215 073 965
- US-A1- 2016 143 219
- US-A1- 2022 266 437
- US-B2- 11 219 159

## Description

### TECHNICAL FIELD

The present invention relates to an edger, which belongs to a field of garden tools.

### BACKGROUND

The edger is specially used to trim the edge of the lawn along a curb. It can not only trim the lawn but also improve the aesthetics of the lawn.

Traditional edgers can remove weeds and cut grooves, but when working outdoors for a long time, the motor of the edger easily heats up, and in complex outdoor environments, rain, dust or debris can easily enter the edger along the heat dissipation holes of the motor, which causes the motor to malfunction easily. Moreover, the motor cannot be quickly disassembled when maintenance, which enables it to be difficult to further improve work efficiency.

In view of this, it is necessary to propose a garden tool to solve the above problems.

A power tool is disclosed in US 2022/266437, wherein a power head includes a motor, and a power shaft mechanically coupled to the motor, each shaft coupler includes a power shaft connecter for connecting to the power shaft, and a shaft-specific connecter for connecting to tool shafts of the tool heads.

### SUMMARY

The present invention provides a garden tool to solve a problem of heat dissipation.

The present invention provides a garden tool according to claim 1. Preferred embodiments are provided in the dependent claims.

Beneficial effects of the present invention are that it only needs to remove the cover to take out the motor, which shortens maintenance time and improve efficiency.

### BRIEF DESCRIPTION OF THE DRAWINGS

FIG. 1 is a partial schematic structural view of a garden tool of the present invention.
FIG. 2 is a schematic structural view of a working head of the garden tool of the present invention.
FIG. 3 is a second schematic structural view of the working head of the garden tool of the present invention from another angle.
FIG. 4 is an exploded structural schematic view of the working head of the garden tool of the present invention.
FIG. 5 is a schematic structural view of a motor of the garden tool of the present invention.
FIG. 6 is a schematic structural view of a housing of the garden tool of the present invention.
FIG. 7 is a partial cross-sectional structure schematic view of the working head of the garden tool of the present invention.
FIG. 8 is a second partial cross-sectional structure schematic view of the working head of the garden tool of the present invention from another angle.
FIG. 9 is a structural schematic view of removing the housing of the garden tool of the present invention.
FIG. 10 is a schematic structural view of a clamping plate of the garden tool of the present invention.

### DETAILED DESCRIPTION

In order to enable a purpose, technical solutions and advantages of the present invention to be clearer, the present invention will be described in detail below with reference to drawings and specific embodiments.

It should be noted that, in order to avoid obscuring the disclosure with unnecessary details, only structures and/or processing steps closely related to the solution of the present invention are shown in the drawings, while other details that are not closely related to the present invention are omitted.

Additionally, it should be noted that a term "comprises", "includes" or any other variation thereof is intended to cover a non-exclusive inclusion such that a process, method, article or apparatus including a set of elements includes not only those elements, but also other elements not expressly listed, or elements inherent to the process, method, article, or apparatus.

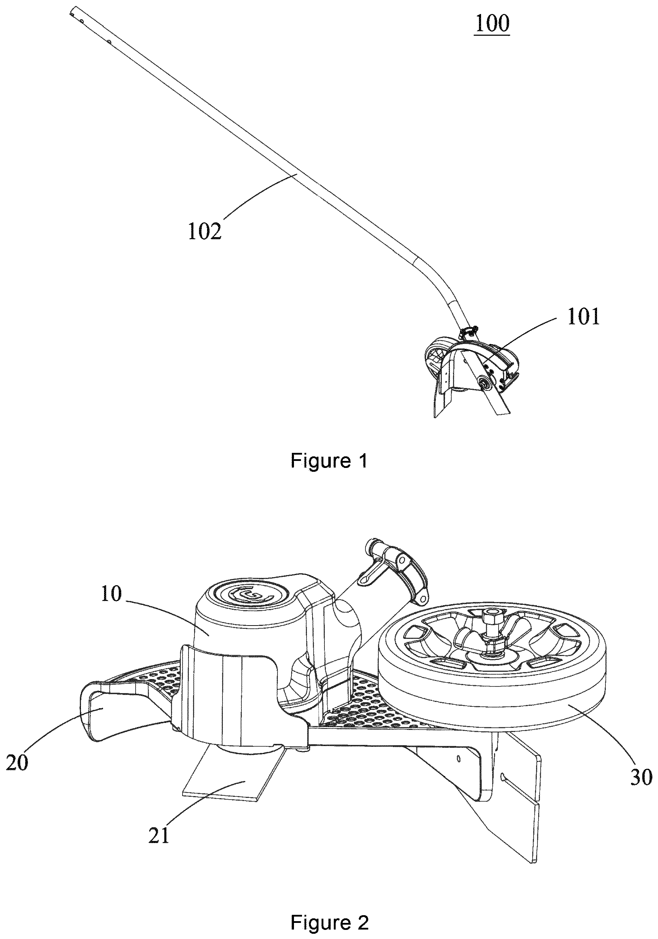

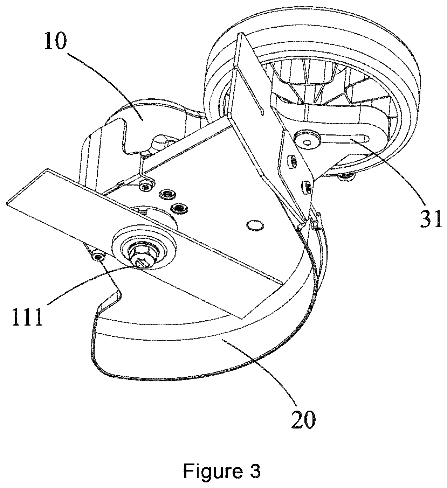

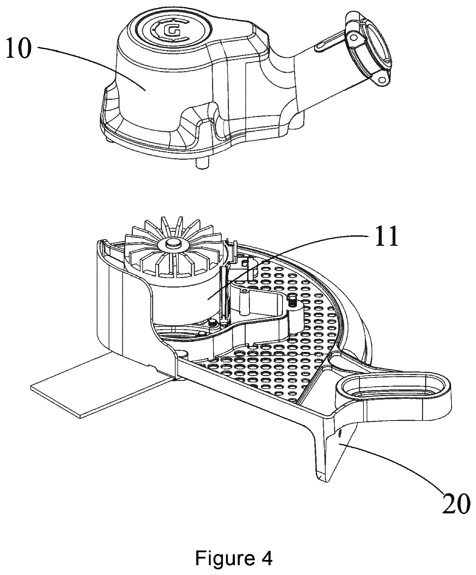

Please refer to FIG. 1 through FIG. 10. The present invention provides a garden tool. The garden tool may be an edger 100, which will not be described in detail will not be subject to any limitations. For clarity of description, a specific structure of an edger 100 will be described in detail in a following description.

The edger 100 includes a control assembly (not shown), a working head 101 and a connecting rod 102. The control assembly is capable of operating and controlling the edger 100. The connecting rod 102 is used to connect the control assembly and the working head 101, and the control assembly and the working head 101 are respectively arranged at both ends of the connecting rod 102. The control assembly is further provided with a power supply. The power supply is provided with a power cable passing through the connecting rod 102 and connected with the working head 101. The power supply is used to supply power to the working head 101 and drive the working head 101 to perform operations.

Please refer to FIG. 2 through FIG. 4. The working head 101 includes a housing 10 and a cover 20. The housing 10 is provided with an accommodating cavity, and a motor 11 is accommodated in the accommodating cavity. The motor 11 is provided with a motor wire connected with the power cable. The housing 10 is fixedly connected with the connecting rod 102. The cover 20 is provided with a blade 21 for cutting. A motor shaft 111 of the motor 11 extends outward from an opening of the accommodating cavity, so that the housing 10 is connected with the cover 20, and the motor shaft 111 of the motor 11 partially extends to the cover 20 so as to drive the blade 21 to perform operations.

Furthermore, in order to facilitate a disassembly of the motor 11 in the housing 10, the motor 11 in the accommodating cavity is fixedly connected with the cover 20, which means that when the housing 10 and the cover 20 are disassembled and separated, the motor 11 can be taken out of the housing 10 with the cover 20. In some embodiments, the motor wire and the power cable are connected in a pluggable way, so that the motor 11 can be easily powered off after being taken out, and can be easily mounted again.

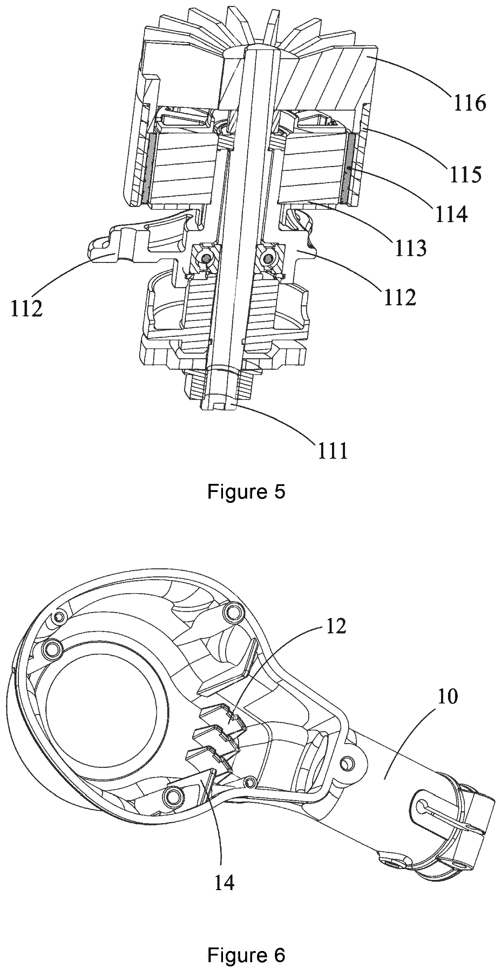

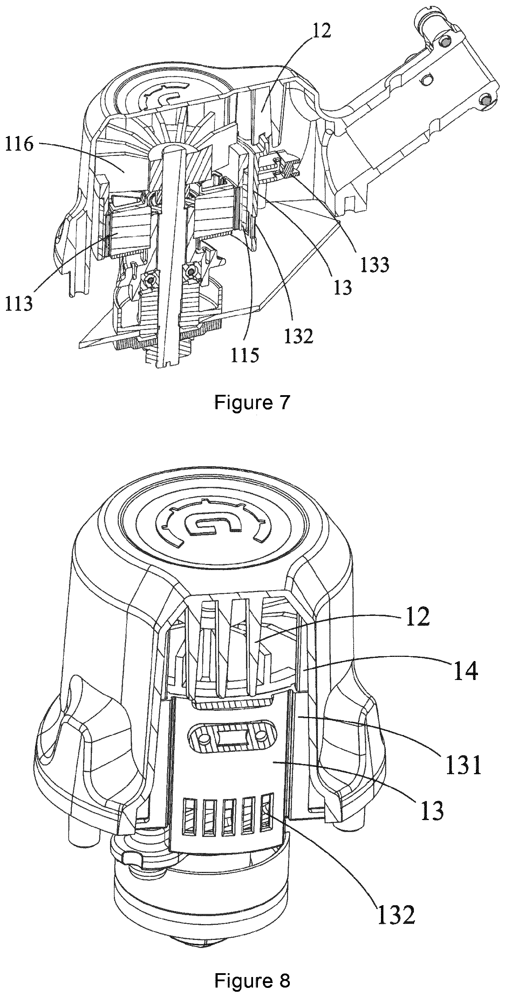

Please refer to FIG. 5 and FIG. 7. Specifically, the motor 11 further includes a casing 115, a fixing component 113, a rotating component 114 and a bracket 112. The fixing component 113, the rotating component 114 and the bracket 112 are all accommodated in the casing 115. The motor shaft 111, the bracket 112, the fixing component 113, the rotating component 114 and the casing 115 are arranged in sequence from an inside to the outside. The bracket 112 is sleeved on an outside of the motor shaft 111 and the motor shaft 111 can rotate relative to the bracket 112. It may be understood that a bearing may further be arranged between the motor shaft 111 and the bracket 112. A number of the bearings is not limited, an inner ring of the bearing is fixedly connected with the motor shaft 111, and an outer ring of the bearing is fixedly connected with the bracket 112. It should be noted that the fixed component 113 is an electromagnetic coil, and the rotating component 114 is a magnet.

The fixing component 113 surrounds the bracket 112 and is fixedly connected with the bracket 112. The bracket 112 is fixedly connected with the cover 20, so that the entire motor 11 is fixed to the cover 20. In some embodiments, the bracket 112 is fixed to the cover 20 through three fasteners.

The rotating component 114 is fixedly arranged on an inner wall of the casing 115 around the fixing component 113, and the casing 115 is fixedly connected with the motor shaft 111. With this arrangement, the fixing component 113 and the bracket 112 are stationary relative to the cover 20, and the rotating component 114 rotates around the fixing component 113 and drives the casing 115 and the motor shaft 111 to rotate. Since the motor 11 is not physically connected with the housing 10, the casing 115 can rotate in the accommodating cavity.

In an embodiment of the present invention, in order to further enhance a heat dissipation of the motor 11, a fan 116 is provided between the casing 115 and the motor shaft 111, the fan 116 is provided with a plurality of radially distributed fan blades. and the casing 115 is fixedly connected with the motor shaft 111 through the fan blade, which means that a rotation center of the fan 116 is connected with the motor shaft 111 and can rotate synchronously with the motor shaft 111. An outer periphery of the fan 116 is fixedly connected with the inner wall of the casing 115.

It should be noted that the fan 116 is a centrifugal type, and the fan 116 can discharge airflow which is in an extending direction of the motor shaft 111 along a radial direction. Therefore, the fan blade is fixed to the casing 115, a gap is formed between adjacent fan blades at an upper end of the housing 115 for the airflow to flow out.

Please refer to FIG. 6. Further, a deflector plate 12 is arranged on an inner wall of a top of the housing 10. The deflector plate 12 extends downward from the top of the housing 10. The deflector plate 12 are arranged in an arc shape and at least two deflector plates 12 are arranged to form a passage for air to flow between the adjacent deflector plates 12 and between the deflector plates 12 and a side wall of the housing 10. In particular, a distance between the fan 116 and the top of the housing 10 is less than a height of the deflector plate 12 which is extending downward from the top of the housing 10. This arrangement allows the airflow of the fan 116 to flow from between the fan blades into between the deflector plates 12 when flowing in a horizontal direction.

Please refer to FIG. 7, FIG. 8 and FIG. 10. In order to further circulate the air flow, the housing 10 is further provided with a clamping plate 13. Both sides ofthe clamping plate 13 are provided with first sliding grooves 131 in the horizontal direction. A protruding rib 14 matched with the first sliding groove 131 is formed in the housing 10, and the first sliding groove 131 can slide relative to the protruding rib 14, so that the clamping plate 13 is mounted into the housing 10 along the protruding rib 14. The clamping plate 13 is arranged on an outside of the casing 115, and upper and lower ends of the clamping plate 13 in a vertical direction abut the deflector plate 12 and the cover 20 respectively. With this arrangement, the clamping plate 13 is equivalent to dividing a space where the motor 11 is located, so that the air generated by the fan 116 can only flow out from the gap between the deflector plates 12.

In addition, the clamping plate 13 is further provided with an air inlet 132 for a return flow of air. The airflow generated by the fan 116 flows out through the deflector plates 12 and then flows into the motor 11 through the air inlet 132, after flowing through the fixing component 113, heat generated on the fixing component 113 can be taken away and flow back to the fan 116 to complete a cycle. It may be understood that the air will continuously contact inner walls of the housing 10 and the cover 20 during the cycle, thereby completing a heat exchange.

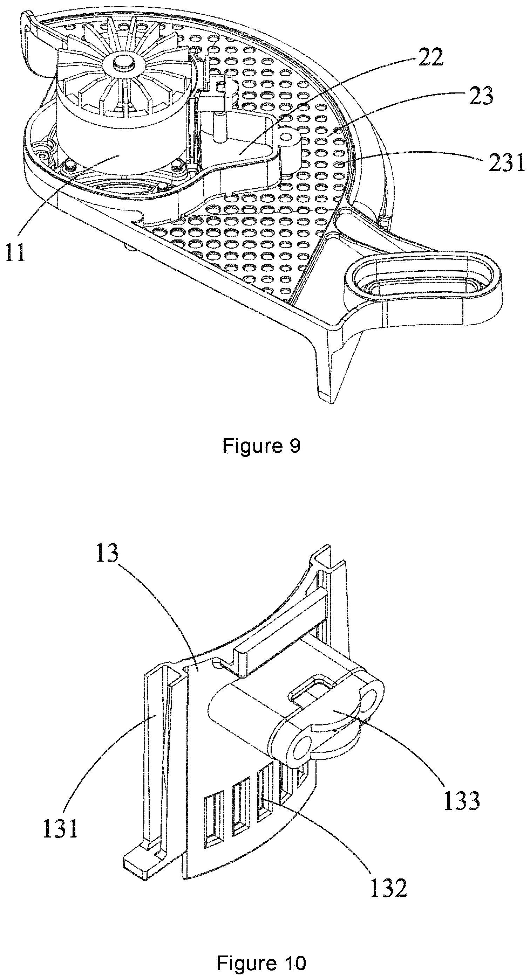

Please refer to FIG. 9. In another embodiment of the present invention, the cover 20 is provided with a first surface 22 for mounting the bracket 112 and a second surface 23 surrounding the first surface 22. A plurality of concave holes 231 distributed in an array are formed on the second surface 23. The concave hole 231 can increase a surface area in contact with the air, and heat conducted through the cover 20 can be dissipated through the concave hole 231. Of course, the concave hole 231 may also be a protruding structure, as long as the surface area can be increased and may be specifically configured according to needs, which is not limited here.

Furthermore, the clamping plate 13 is further provided with a cable locking part 133, which is used to fix the power cable and fix the power cable between the cable locking part 133 and the clamping plate 13 in order to prevent the power cable from being entangled or being pulled when the motor 11 is disassembled.

In other embodiments of the present invention, the cover 20 is further provided with a guiding wheel 30, the guiding wheel 30 is pivotally connected with the cover 20 through a rotating shaft, and the cover 20 is further provided with a second sliding groove 31 for the rotating shaft to slide, so that the guiding wheel 30 can slide in the radial direction.

In summary, the present invention only needs to disassemble the cover 20 to take out the motor 11, which shortens maintenance time and improves efficiency. At the same time, through a self-circulation and arranging concave holes 231 on the cover 20 to assist the heat dissipation, there is no need to arrange heat dissipation holes on the housing 10, which can enhance a sealing performance of the housing 10.

The above embodiments are only used to illustrate the technical solutions of the present invention and are not limiting. The invention is defined by the appended claims..

## Claims

1. A garden tool, comprising:
a control assembly;
a working head (101); and
a connecting rod (102), connecting the control assembly and the working head (101); wherein
the working head (101) comprises a housing (10) and a cover (20), the connecting rod (102) is connected with the housing (10), a power cable is provided in the connecting rod (102) extending into the housing (10) and connected with the control assembly, wherein the housing (10) is provided with a clamping plate (13), and the clamping plate (13) is provided with a cable locking part (133) configured to fix the power cable, and
an accommodating cavity is formed in the housing (10), an opening of the accommodating cavity is detachable connected with the cover (20), a motor (11) is provided in the accommodating cavity, the motor (11) is fixedly connected with the cover (20), a blade (21) is arranged in the cover (20), a motor shaft (111) of the motor (11) partially extends into the cover (20) and is fixedly connected with the blade (21), and the motor (11) is provided with a motor wire that is pluggably connected with the power cable, wherein
the motor (11) comprises a casing (115), a fixing component (113), a rotating component (114) and a bracket (112), the fixing component (113), the rotating component (114) and the bracket (112) are all housed in the casing, the bracket (112) is fixedly connected with the cover (20), the bracket (112) is sleeved on an outside of the motor shaft (111), the motor shaft (111) is capable of rotating relative to the bracket (112), the fixing component (113) surrounds the bracket (112) and is fixedly connected with the bracket (112), the rotating component (114) surrounds the fixing component (113) and is fixedly arranged on an inner wall of the casing (115), and the housing (10) is fixedly connected with the motor shaft (111), **characterized in that** a fan (116) is provided between the casing (115) and the motor shaft (111), an outer peripheral part of the fan (116) is fixedly connected with the inner wall of the casing (115), and a rotation center of the fan (116) is connected with the motor shaft (111) and is capable of rotating synchronously with the motor shaft (111).

2. The garden tool according to claim 1, wherein
both sides of the clamping plate (13) are provided with a first sliding groove (131) in a horizontal direction, a protruding rib (14) coupled with the first sliding groove (131) is formed in the housing (10), and the first sliding groove (131) is capable of sliding relative to the protruding rib (14) to enable the clamping plate (13) to be mounted into the housing (10) along the protruding rib (14).

3. The garden tool according to claim 1 or 2, wherein
the fan (116) is a centrifugal fan.

4. The garden tool according to any one of claims 1 to 3, wherein
an inner side wall of a top of the housing (10) is provided with at least two deflector plates (12), the deflector plate (12) is arranged in an arc shape, and the at least two deflector plates (12) are arranged to form passages for air to flow between adjacent deflector plates (12) and between the deflector plate (12) and a side wall of the housing (10).

5. The garden tool according to claim 4, wherein
a distance between the fan (116) and the top of the housing (10) is less than a height of the deflector plate (12) extending downward from the top of the housing (10).

6. The garden tool according to claim 4 or 5, wherein
the clamping plate (13) is arranged on an outside of the housing (10), two ends of the clamping plate (13) respectively abut the deflector plate (12) and the cover (20), an air inlet (132) is arranged in the clamping plate (13), to generate an air flow by the fan (116) to flow out through the deflector plate (12), into the motor (11) through the air inlet (132), and through the fixing component (113) and back to the fan (116) to complete a cycle.

7. The garden tool according to any one of claims 1 to 6, wherein
the cover (20) is provided with a first surface (22) to mount the bracket (112) and a second surface (23) arranged around the first surface (22), and a plurality of concave holes (231) distributed in an array are formed on the second surface (23).

## Patentansprüche

1. Gartenwerkzeug, umfassend:
eine Steuerungsanordnung;
einen Arbeitskopf (101); und
eine Verbindungsstange (102), die die Steuerungsanordnung und den Arbeitskopf (101) verbindet; wobei
der Arbeitskopf (101) ein Gehäuse (10) und eine Abdeckung (20) umfasst, die Verbindungsstange (102) mit dem Gehäuse (10) verbunden ist, in der Verbindungsstange (102) ein Stromkabel bereitgestellt ist, das sich in das Gehäuse (10) erstreckt und mit der Steuerungsanordnung verbunden ist, wobei das Gehäuse (10) mit einer Klemmplatte (13) bereitgestellt ist und die Klemmplatte (13) mit einem Kabelverriegelungsteil (133) bereitgestellt ist, das zur Fixierung des Stromkabels konfiguriert ist, und
im Gehäuse (10) ein Aufnahmeraum ausgebildet ist, eine Öffnung des Aufnahmeraums abnehmbar mit der Abdeckung (20) verbunden ist, im Aufnahmeraum ein Motor (11) bereitgestellt ist, der Motor (11) fest mit der Abdeckung (20) verbunden ist, in der Abdeckung (20) eine Klinge (21) angeordnet ist, eine Motorwelle (111) des Motors (11) sich teilweise in die Abdeckung (20) erstreckt und fest mit der Klinge (21) verbunden ist und der Motor (11) mit einem Motordraht bereitgestellt ist, der einsteckbar mit dem Stromkabel verbunden ist, wobei
der Motor (11) ein Gehäuse (115), ein Befestigungselement (113), ein Drehelement (114) und eine Halterung (112) umfasst, das Befestigungselement (113), das Drehelement (114) und die Halterung (112) alle im Gehäuse untergebracht sind, die Halterung (112) fest mit der Abdeckung (20) verbunden ist, die Halterung (112) auf einer Außenseite der Motorwelle (111) aufgesetzt ist, die Motorwelle (111) imstande ist, sich relativ zur Halterung (112) zu drehen, das Befestigungselement (113) die Halterung (112) umschließt und fest mit der Halterung (112) verbunden ist, das Drehelement (114) das Befestigungselement (113) umschließt und fest an einer Innenwand des Gehäuses (115) angeordnet ist und das Gehäuse (10) fest mit der Motorwelle (111) verbunden ist, **dadurch gekennzeichnet, dass** zwischen dem Gehäuse (115) und der Motorwelle (111) ein Lüfter (116) bereitgestellt ist, ein Außenumfangsteil des Lüfters (116) fest mit der Innenwand des Gehäuses (115) verbunden ist und ein Drehmittelpunkt des Lüfters (116) mit der Motorwelle (111) verbunden ist und imstande ist, sich synchron mit der Motorwelle (111) zu drehen.

2. Gartenwerkzeug nach Anspruch 1, wobei
beide Seiten der Klemmplatte (13) mit einer ersten Gleitnut (131) in horizontaler Richtung bereitgestellt sind, im Gehäuse (10) eine mit der ersten Gleitnut (131) gekoppelte, hervorstehende Rippe (14) ausgebildet ist und die erste Gleitnut (131) imstande ist, relativ zur hervorstehenden Rippe (14) zu gleiten, sodass die Klemmplatte (13) entlang der hervorstehenden Rippe (14) in das Gehäuse (10) eingebaut werden kann.

3. Gartenwerkzeug nach Anspruch 1 oder 2, wobei
der Lüfter (116) ein Radialventilator ist.

4. Gartenwerkzeug nach einem der Ansprüche 1 bis 3, wobei
eine innere Seitenwand einer Oberseite des Gehäuses (10) mit mindestens zwei Ablenkplatten (12) bereitgestellt ist, die Ablenkplatte (12) bogenförmig angeordnet ist und die mindestens zwei Ablenkplatten (12) angeordnet sind, um Durchgänge für Luft zum Strömen zwischen benachbarten Ablenkplatten (12) sowie zwischen der Ablenkplatte (12) und einer Seitenwand des Gehäuses (10) zu bilden.

5. Gartenwerkzeug nach Anspruch 4, wobei
der Abstand zwischen dem Lüfter (116) und der Oberseite des Gehäuses (10) kleiner ist als eine Höhe der Ablenkplatte (12), die sich von der Oberseite des Gehäuses (10) nach unten erstreckt.

6. Gartenwerkzeug nach Anspruch 4 oder 5, wobei
die Klemmplatte (13) an einer Außenseite des Gehäuses (10) angeordnet ist, zwei Enden der Klemmplatte (13) jeweils an die Ablenkplatte (12) und die Abdeckung (20) anstoßen, in der Klemmplatte (13) ein Lufteinlass (132) angeordnet ist, um einen Luftstrom durch den Lüfter (116) zum Ausströmen durch die Ablenkplatte (12), in den Motor (11) durch den Lufteinlass (132) und durch das Befestigungselement (113) und zurück zum Lüfter (116) zu erzeugen, um einen Zyklus zu vollenden.

7. Gartenwerkzeug nach einem der Ansprüche 1 bis 6, wobei
die Abdeckung (20) mit einer ersten Fläche (22) zum Einbauen der Halterung (112) und einer zweiten Fläche (23) bereitgestellt ist, die um die erste Fläche (22) herum angeordnet ist, und eine Vielzahl von konkaven Löchern (231) in einem Feld verteilt auf der zweiten Fläche (23) ausgebildet ist.

## Revendications

1. Outil de jardinage, comprenant :
un ensemble de commande;
une tête de travail (101) ; et
une barre de liaison (102), reliant l'ensemble de commande et la tête de travail (101) ; dans lequel
la tête de travail (101) comprend un boîtier (10) et un couvercle (20), la barre de liaison (102) est reliée au boîtier (10), un câble d'alimentation est ménagé dans la barre de liaison (102) s'étendant dans le boîtier (10) et reliée à l'ensemble de commande, dans lequel le boîtier (10) est pourvu d'une plaque de serrage (13), et la plaque de serrage (13) est dotée d'une pièce de blocage de câble (133) configurée pour fixer le câble d'alimentation, et
une cavité de réception est formée dans le boîtier (10), une ouverture de la cavité de réception est reliée de manière détachable au couvercle (20), un moteur (11) est ménagé dans la cavité de réception, le moteur (11) est relié à demeure au couvercle (20), une lame (21) est agencée dans le couvercle (20), un arbre de moteur (111) du moteur (11) s'étend en partie dans le couvercle (20) et est relié à demeure à la lame (21), et le moteur (11) est pourvu d'un câble de moteur qui est relié de manière enfichable au câble d'alimentation, dans lequel
le moteur (11) comprend un carter (115), un composant de fixation (113), un composant rotatif (114) et un support (112), le composant de fixation (113), le composant rotatif (114) et le support (112) sont tous logés dans le carter, le support (112) est relié à demeure au couvercle (20), le support (112) est emmanché sur une partie extérieure de l'arbre de moteur (111), l'arbre de moteur (111) peut tourner par rapport au support (112), le composant de fixation (113) entoure le support (112) et est relié à demeure au support (112), le composant rotatif (114) entoure le composant de fixation (113) et est agencé à demeure sur une paroi interne du carter (115), et le boîtier (10) est relié à demeure à l'arbre de moteur (111), **caractérisé en ce qu'**un ventilateur (116) est ménagé entre le carter (115) et l'arbre de moteur (111), une partie périphérique externe du ventilateur (116) est reliée à demeure à la paroi interne du carter (115), et un centre de rotation du ventilateur (116) est relié à l'arbre de moteur (111) et peut tourner de manière synchrone avec l'arbre de moteur (111).

2. Outil de jardinage selon la revendication 1, dans lequel
les deux côtés de la plaque de serrage (13) sont dotés d'une première rainure de coulissement (131) dans une direction horizontale, une nervure saillante (14) couplée à la première rainure de coulissement (131) est formée dans le boîtier (10), et la première rainure de coulissement (131) peut coulisser par rapport à la nervure saillante (14) pour permettre de monter la plaque de serrage (13) dans le boîtier (10) le long de la nervure saillante (14).

3. Outil de jardinage selon la revendication 1 ou 2, dans lequel
le ventilateur (116) est un ventilateur centrifuge.

4. Outil de jardinage selon l'une quelconque des revendications 1 à 3, dans lequel
une paroi latérale interne d'une partie supérieure du boîtier (10) est pourvue d'au moins deux plaques déflectrices (12), la plaque déflectrice (12) est agencée en forme d'arc, et les au moins deux plaques déflectrices (12) sont agencées de manière à former des passages permettant à l'air de circuler entre des plaques déflectrices adjacentes (12) et entre la plaque déflectrice (12) et une paroi latérale du boîtier (10).

5. Outil de jardinage selon la revendication 4, dans lequel
une distance entre le ventilateur (116) et la partie supérieure du boîtier (10) est inférieure à une hauteur de la plaque déflectrice (12) s'étendant vers le bas depuis la partie supérieure du boîtier (10).

6. Outil de jardinage selon la revendication 4 ou 5, dans lequel
la plaque de serrage (13) est agencée sur une partie extérieure du boîtier (10), deux extrémités de la plaque de serrage (13) sont respectivement en butée contre la plaque déflectrice (12) et le couvercle (20), une arrivée d'air (132) est agencée dans la plaque de serrage (13), de façon à générer au moyen du ventilateur (116) un flux d'air s'écoulant à travers la plaque déflectrice (12), dans le moteur (11), à travers l'arrivée d'air (132) et à travers le composant de fixation (113) avant de revenir au ventilateur (116) de façon à boucler un cycle.

7. Outil de jardinage selon l'une quelconque des revendications 1 à 6, dans lequel
le couvercle (20) est pourvu d'une première surface (22) pour monter le support (112) et d'une seconde surface (23) agencée autour de la première surface (22), et une pluralité de trous concaves (231) répartis en grille est formée sur la seconde surface (23).
